**Europäisches Patentamt**

**European Patent Office**

**Office européen des brevets**

(11) Veröffentlichungsnummer: **0 337 226**

**A1**

## (12) EUROPÄISCHE PATENTANMELDUNG

(21) Anmeldenummer: **89105773.9**

(51) Int. Cl.⁴: **H02B 1/04**

(22) Anmeldetag: **01.04.89**

(30) Priorität: **09.04.88 DE 8804707 U**

(43) Veröffentlichungstag der Anmeldung:
**18.10.89 Patentblatt 89/42**

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Münch, Udo**
**Wetzlarer Strasse 41**
**D-6349 Sinn(DE)**

(74) Vertreter: **Vogel, Georg**
**Pat.-Ing. Georg Vogel**
**Hermann-Essig-Strasse 35**
**D-7141 Schwieberdingen(DE)**

(54) **Tragschiene.**

(57) Die Erfindung betrifft eine Tragschiene mit einem Befestigungsschenkel und parallel dazu ausgerichteten und versetzten Befestigungsflanschen, die über die gesamte Länge ihrer Außenkanten mit einer gleichmäßigen Verzahnung versehen sind, auf die mit einem Montagefuß versehene elektrische Geräte aufsetzbar sind, wobei die Geräte oder Teile derselben die Befestigungsflansche hintergreifen und an diesen festgelegt sind. Die Verzahnung erstreckt sich mit ihrer, senkrecht zur Längsachse der Tragschiene gerichteten Tiefe vorzugsweise nur über einen Teil der Breite des Befestigungsflansches. Beide Befestigungsflansche sind mit identischen und voneinander abgekehrten Verzahnungen versehen, wobei jeweils Zahnlücken und Zähne der beiden Verzahnungen einander zugeordnet oder so ausgebildet sind, daß jeweils die Zahnlücken der einen Verzahnung der Zähnen der anderen Verzahnung und umgekehrt zugeordnet sind.

FIG.1

# Tragschiene

Die Erfindung betrifft eine Tragschiene mit einem Befestigungsschenkel und parallel dazu ausgerichteten und versetzten Befestigungsflanschen, die über die gesamte Länge ihrer Außenkanten mit einer gleichmäßigen Verzahnung versehen sind, auf die mit einem Montagefuß versehene elektrische Geräte aufsetzbar sind, wobei die Geräte oder Teile derselben die Befestigungsflansche hintergreifen und an diesen festgelegt sind.

Die Tragschiene wird mit dem Befestigungsschenkel an einer Wand befestigt, und die Befestigungsflansche stehen dann in vorgegebenem Abstand zur Wand. Derartige Tragschienen gibt es mit verschiedenen Querschnitten, gewöhnlich haben sie jedoch einen hutprofilartigen Querschnitt. Allen Tragschienen ist aber gemeinsam, daß sie mindestens zwei Befestigungsflansche aufweisen, an denen die elektrischen Geräte durch Aufrasten festgelegt werden. Dabei wird der Montagefuß des Gerätes an einem Befestigungsflansch so eingehängt, daß dieser hintergriffen wird, während elastische oder abgefederte Teile über den anderen Befestigungsflansch gedrückt hinter diesem einrasten, so daß das Gerät auf der Tragschiene befestigt ist und senkrecht dazu nicht mehr von der Tragschiene abgezogen werden kann, es sei denn, daß vorher die Rastverbindung im Bereich des elastischen oder abgefederten Teils gelöst wird. Die Tragschienen sind genormt, aber die Geräte haben die unterschiedlichsten Ausgestaltungen des Montagefußes, insbesondere der elastischen oder abgefederten Rastmittel. Alle Tragschienen haben in Verbindung mit den bekannten elektrischen Geräten mit Montagefuß den Nachteil, daß die axiale Unverschiebbarkeit in Richtung der Tragschiene nur bis zu einem bestimmten Grad sichergestellt ist. Bei größeren Erschütterungen des Gerätes hingegen, was z.B. beim Transport eines verdrahteten Schaltschrankes der Fall ist, kann eine relative Verschiebung des Gerätes gegenüber der Tragschiene nicht ausgeschlossen werden.

Es ist Aufgabe der Erfindung, eine Tragschiene der eingangs erwähnten Art zu schaffen, auf der in einfacher Weise die aufgesetzten bzw. aufgerasteten elektrischen Geräte so fixiert sein können, daß sie in axialer Richtung der Tragschiene unverschiebbar bzw. nur unter Kraftaufwendung verschiebbar festlegbar sind.

Diese Aufgabe wird nach der Erfindung dadurch gelöst, daß die Verzahnung sich mit ihrer, senkrecht zur Längsachse der Tragschiene gerichteten Tiefe vorzugsweise nur über einen Teil der Breite des Befestigungsflansches erstreckt und daß beide Befestigungsflansche mit identischen und voneinander abgekehrten Verzahnungen versehen sind, wobei jeweils Zahnlücken und Zähne der beiden Verzahnungen einander zugeordnet oder so ausgebildet sind, daß jeweils die Zahnlücken der einen Verzahnung der Zähne der anderen Verzahnung und umgekehrt zugeordnet sind.

Es hat sich gezeigt, daß die handelsüblichen elektrischen Geräte mit den unterschiedlichsten Rastmitteln auf einer so gestalteten Tragschiene axial gesichert werden können, wobei teilweise die Rastmittel selbst oder Teile desselben in die Zahnlücken der Verzahnung gelangen und eine axial unverschiebbare Verbindung zwischen dem Gerät und der Tragschiene bringen. Vielfach reicht es aber auch schon aus, daß sich die Zahnflanken der Zähne der Verzahnung an dem Gerät festsetzen und dieses festhalten, so daß es nur unter erhöhter Kraftaufwendung längs der Tragschiene verstellt werden kann. Und schließlich bieten die Zähne der Verzahnung die Möglichkeit, längs der Tragschiene Anschläge zu bilden, die das Gerät axial unverschiebbar auf der Tragschiene festlegen. Die kleine Tiefe der Verzahnung hat den Vorteil, daß das Gerät auch noch im Bereich der Zahnlücken den Befestigungsflansch hintergreifen kann.

Ein bevorzugtes Ausführungsbeispiel ist dadurch gekennzeichnet, daß die Verzahnungen eine Zahnbreite aufweisen, die der Breite der Zahnlücken entspricht.

Wird bei einem Gerät kein Teil in eine Zahnlücke der Verzahnung eingeführt, dann kann die axiale Festlegung des Gerätes auf der Tragschiene dadurch verbessert werden, daß die Zähne im Bereich der Außenkante des Befestigungsflansches den benachbarten Zahnlücken zugekehrt scharfe Kanten bilden, die zur Außenkante des Befestigungsflansches in einem Winkel stehen, der gleich oder kleiner als 90° ist.

Eine weitere Möglichkeit der Beeinflussung und Erhöhung der Haltekraft für das auf der Tragschiene axial gesicherte Gerät ergibt sich durch die Form der Verzahnung. So kann z.B. vorgesehen sein, daß die Zahnlücken und die Zähne gleichen rechteckförmigen Querschnitt aufweisen, oder daß die Zahnlücken und die Zähne gleichen trapezförmigen Querschnitt aufweisen, wobei sich die Zahnlücken zur Außenkante des Befestigungsflansches hin kontinuierlich verjüngen und die Zähne kontinuierlich verbreitern, oder daß die Zahnlücken halbkreisförmigen Querschnitt aufweisen, und daß die Zähne im Bereich der Außenkante des Befestigungsflansches eine Breite aufweisen, die dem doppelten Radius der Zahnlücken entspricht. In jedem Fall ergeben sich dabei im Bereich der Außenkanten der Befestigungsflansche scharfe Kanten an den Zähnen, die sich am Gerät festkrallen.

Anschläge zur axialen Festlegung eines Gerätes auf der Tragschiene lassen sich einfach dadurch bilden, daß zur axialen Festlegung von Geräten Zähne der Verzahnungen in Richtung zum Befestigungsschenkel und/oder in Richtung vom Befestigungsschenkel verformbar sind. Bei entsprechend kleiner Teilung der Verzahnung läßt sich dadurch an beliebiger Stelle in Längsrichtung der Tragschiene das Gerät unverschiebbar festlegen.

Bei der Neugestaltung von Geräten kann die unverschiebbare Festlegung auch dadurch erreicht werden, daß zur axialen Festlegung von Geräten Teile derselben in die Zahnlücken der Verzahnungen einführbar sind. Dabei kann in einfacher Weise vorgesehen sein, daß die Teile an einem federbelasteten Schieber oder dgl. angebracht sind, der den zugekehrten Befestigungsflansch zumindest teilweise hintergreift.

Die Erfindung wird anhand von in der Zeichnung dargestellten Ausführungsbeispielen näher erläutert. Es zeigt:

Fig. 1 in Vorderansicht eine Tragschiene, bei der die Befestigungsflansche mit Verzahnungen versehen sind,

Fig. 2 eine Seitenansicht der Tragschiene mit aufgesetztem elektrischem Gerät,

Fig. 3 den Querschnitt der Tragschiene im Bereich der Zahnlücken,

Fig. 4 die Verformung eines Zahnes in Richtung zum Befestigungsschenkel hin,

Fig. 5 die Verformung eines Zahnes in Richtung vom Befestigungsschenkel weg,

Fig. 6 eine trapezförmige Verzahnung und

Fig. 7 eine Verzahnung mit halbkreisförmigen Zahnlücken.

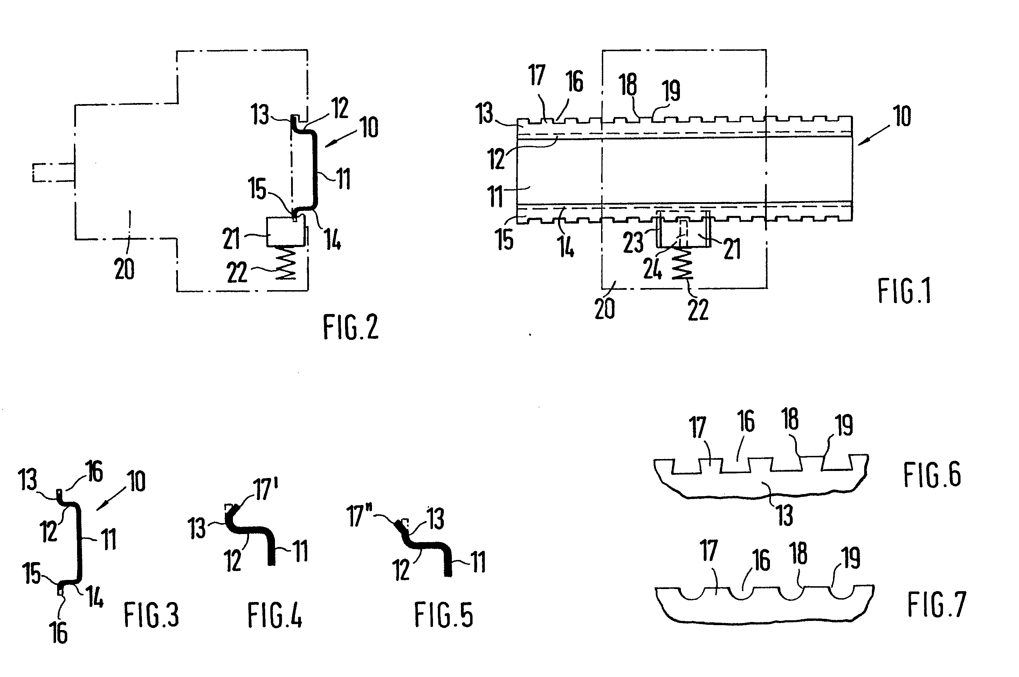

Wie die Fig. 1 und 2 zeigen, wird beim Ausführungsbeispiel von einer genormten Tragschiene 10 mit Hutprofil ausgegangen. Die Tragschiene 10 wird über den Befestigungsschenkel 11 an einer Wand oder dgl. befestigt. Die Übergangsabschnitte 12 und 14 versetzen die Befestigungsflansche 13 und 15, so daß diese in einer Ebene parallel zum Befestigungsschenkel 11 liegen und den geforderten Befestigungsabstand einnehmen. Die elektrischen Geräte 20 haben einen sogenannten Montagefuß, der in der der Tragschiene 10 zugekehrten Unterseite eine entsprechende Aufnahme hat. Diese Aufnahme ist so ausgestaltet, daß das Gerät 20 auf dem Befestigungsflansch 13 eingehängt werden kann und diesen hintergreift. Auf der gegenüberliegenden Seite der Aufnahme ist der Schieber 21 angeordnet, der über die Feder 22 im Gehäuse des Gerätes 20 abgefedert ist. Das am Befestigungsflansch 13 eingehängte Gerät 20 wird auf den Befestigungsflansch 15 aufgerastet. Dabei wird der Schieber 21 zunächst ausgelenkt und rastet dann hinter dem Befestigungsflansch 15 ein. Damit ist das Gerät 20 an der Tragschiene 10 festgehalten und kann senkrecht zu dieser nicht mehr abgezogen werden.

Wie die Fig. 1 zeigt, sind die Außenkanten, d.h. die freien Kanten, der Befestigungsflansche 13 und 15 durchgehend mit einer Verzahnung versehen, die Zahnlücken 16 und Zähne 17 umfaßt. Die senkrecht zur Längsrichtung der Tragschiene 10 ausgerichtete Tiefe der Verzahnung erstreckt sich nur über einen Teil der Breite der Befestigungsflansche 13 und 15. Die Verzahnungen an beiden Befestigungsflanschen 13 und 15 hat den Vorteil, daß die Tragschiene 10 in beliebiger Stellung an der Wand oder dgl. befestigt werden kann. Das Gerät 20 findet in jedem Fall auf der Seite mit den Rastmitteln, z.B. dem Schieber 21, eine Verzahnung des zugekehrten Befestigungsflansches vor. Wie Fig. 1 erkennen läßt, kann der Schieber 21 beim Hintergreifen des Befestigungsflansches 15 mit den angeformten Teilen 23 oder 24 in eine Zahnlücke 16 eingeführt werden. Diese Teile 23 und 24 bringen dann eine eindeutige axiale Festlegung des Gerätes 20 auf der Tragschiene 10. Dabei können die Teile 23 und 24 auf die Teilung der Verzahnung abgestimmt werden.

Bei dem Ausführungsbeispiel nach den Fig. 1 und 2 wird eine Verzahnung verwendet, bei der die Zahnlücken 16 und die Zähne 17 denselben rechteckigen Querschnitt aufweisen. Daraus ergibt sich auch, daß die Breite der Zahnlücken 16 der Breite der Zähne 17 entspricht. Die Zahnlücken 16 des Befestigungsflansches 13 sind auf die Zahnlücken 16 des Befestigungsflansches 15 ausgerichtet, so daß dasselbe auch für die Zähne 17 der Befestigungsflansche 13 und 15 gilt. Es ist in manchen Fällen günstiger, wenn die Verzahnungen der beiden Befestigungsflansche 13 und 15 um eine halbe Teilung gegeneinander versetzt sind. Dann fallen die Zahnlücken 16 des Befestigungsflansches 13 auf die Zähne 17 des Befestigungsflansches 15 und die Zähne 17 des Befestigungsflansches 13 auf die Zahnlücken 16 des Befestigungsflansches 15.

Hat das Gerät 20 keine Teile 23 und 24 zum Eingriff in Zahnlücken 16 der Verzahnung, dann können, wie die Fig. 3 bis 5 zeigen, durch Verformen der Zähne 17 Anschläge gebildet werden, an denen das Gehäuse des Gerätes 10 oder der Schieber 21 des Gerätes 20 anstößt. Auch hier wird das Gerät 20 dann axial unverschiebbar auf der Tragschiene 10 festgelegt. Dabei kann der Zahn 17', wie Fig. 4 zeigt, in Richtung zum Befestigungsschenkel 11 hin verformt sein. Der Zahn 17" kann aber auch vom Befestigungsschenkel 11 der Tragschiene 10 weg verformt sein, wie Fig. 5 zeigt.

Es gibt auch Fälle, bei denen es ausreicht, wenn die Zähne 17 der Verzahnungen sich an dem Gerät 20 festkrallen. Dazu ist es wichtig, daß die Zähne 17 im Bereich der Außenkanten der Befestigungsflansche 13 und 15 scharfe Kanten 18 und 19 bilden. Diese scharfen Kanten sollten zur Außenkante der Befestigungsflansche 13 und 15 hin in einem Winkel stehen, der gleich oder kleiner als 90° ist. Dann sind die scharfen Kanten besonders geeignet, sich am Gerät 20 wie Widerhaken zu verkrallen.

Wie Fig. 6 zeigt, kann die Verzahnung trapezförmig gestaltet sein, wobei die Zahnlücken 16 und die Zähne 17 wieder gleichen Querschnitt aufweisen. Die Zahnlücken 16 verjüngen sich zur Außenkante des Befestigungsflansches 13 hin kontinuierlich, während sich die Zähne 17 ebenso kontinuierlich zur Außenkante des Befestigungsflansches 13 hin verbreitern. Die trapezförmige Verzahnung bringt besonders scharfe Kanten 18 und 19.

Fig. 7 zeigt eine Verzahnung mit halbkreisförmigen Zahnlücken 16. Die Zähne 17 haben eine Breite, die dem doppelten Radius der Zahnlücken 16 entspricht. Diese Verzahnung ist leicht auszustanzen, bringt aber dennoch scharfe Kanten 18 und 19 an den Zähnen 17.

**Ansprüche**

1. Tragschiene mit einem Befestigungsschenkel und parallel dazu ausgerichteten und versetzten Befestigungsflanschen, die über die gesamte Länge ihrer Außenkanten mit einer gleichmäßigen Verzahnung versehen sind, auf die mit einem Montagefuß versehene elektrische Geräte aufsetzbar sind, wobei die Geräte oder Teile derselben die Befestigungsflansche hintergreifen und an diesen festgelegt sind,
dadurch gekennzeichnet,
daß die Verzahnung sich mit ihrer, senkrecht zur Längsachse der Tragschiene (10) gerichteten Tiefe vorzugsweise nur über einen Teil der Breite des Befestigungsflansches (13,15) erstreckt und
daß beide Befestigungsflansche (13,15) mit identischen und voneinander abgekehrten Verzahnungen versehen sind, wobei jeweils Zahnlücken (16) und Zähne (17) der beiden Verzahnungen einander zugeordnet oder so ausgebildet sind, daß jeweils die Zahnlücken 816) der einen Verzahnung der Zähnen (17) der anderen Verzahnung und umgekehrt zugeordnet sind.

2. Tragschiene nach Anspruch 1,
dadurch gekennzeichnet,
daß die Verzahnungen eine Zahnbreite aufweisen, die der Breite der Zahnlücken (16) entspricht.

3. Tragschiene nach einem der Ansprüche 1 oder 2
dadurch gekennzeichnet,

daß die Zähne (17) im Bereich der Außenkante des Befestigungsflansches (13,15) den benachbarten Zahnlücken (16) zugekehrt scharfe Kanten bilden, die zur Außenkante des Befestigungsflansches (13,15) in einem Winkel stehen, der gleich oder kleiner als 90° ist.

4. Tragschiene nach Anspruch 3,
dadurch gekennzeichnet,
daß die Zahnlücken (16) und die Zähne (17) gleichen rechteckförmigen Querschnitt aufweisen.

5. Tragschiene nach Anspruch 3,
dadurch gekennzeichnet,
daß die Zahnlücken (16) und die Zähne (17) gleichen trapezförmigen Querschnitt aufweisen, wobei sich die Zahnlücken (16) zur Außenkante des Befestigungsflansches (13,15) hin kontinuierlich verjüngen und die Zähne (17) kontinuierlich verbreitern (Fig. 6).

6. Tragschiene nach Anspruch 3,
dadurch gekennzeichnet,
daß die Zahnlücken (16) halbkreisförmigen Querschnitt aufweisen und
daß die Zähne (17) im Bereich der Außenkante des Befestigungsflansches (13,15) eine Breite aufweisen, die dem doppelten Radius der Zahnlücken (16) entspricht (Fig. 7).

7. Tragschiene nach einem der Ansprüche 1 bis 6,
dadurch gekennzeichnet,
daß zur axialen Festlegung von Geräten Zähne (17) der Verzahnungen in Richtung zum Befestigungsschenkel (11) und/oder in Richtung vom Befestigungsschenkel (11) verformbar sind (Fig. 4 und 5).

8. Tragschiene nach einem der Ansprüche 1 bis 7,
dadurch gekennzeichnet,
daß zur axialen Festlegung von Geräten Teile (23,24) derselben in die Zahnlücken (16) der Verzahnungen einführbar sind.

9. Tragschiene nach Anspruch 8,
dadurch gekennzeichnet,
daß die Teile (23,24) an einem federbelasteten Schieber (21) oder dgl. angebracht sind, der den zugekehrten Befestigungsflansch (z.B. 15) zumindest teilweise hintergreift.

FIG.1

FIG.6

FIG.7

FIG.2

FIG.3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0115239 (LA TELEMECANIQUE ELECTRIQUE)<br>* Seite 4, Zeile 27 - Zeile 31 *<br>* Seite 5, Zeile 25 - Zeile 31 *<br>--- | 1 | H02B1/04 |
| A | US-A-3259876 (A. R. NORDEN)<br>* Spalte 2, Zeile 27 - Zeile 62 *<br>----- | 1 | |

**RECHERCHIERTE SACHGEBIETE (Int. Cl.4)**

H02B
H01R

**Der vorliegende Recherchenbericht wurde für alle Patentansprüche erstellt**

| Recherchenort | Abschlußdatum der Recherche | Prüfer |
|---|---|---|
| DEN HAAG | 26 JULI 1989 | DAILLOUX C. |